# DEMANDE DE BREVET EUROPEEN

(11) **EP 4 789 927 A1**
(43) Date de publication de la demande: **12.08.2026**
(21) Numéro de dépôt: 25226257.1
(22) Date de dépôt: 22.12.2025
(51) Int. Cl.: B60R 21/34

(54) **ARMATURE DE PARE-CHOCS DE VÉHICULE AUTOMOBILE**

(30) Priorité: 07.02.2025 FR 2501258
(71) Demandeur: Stellantis Auto SAS, 78300 Poissy (FR)
(72) Inventeur: PERON, RODOLPHE, 95220 HERBLAY (FR); BOUDAN, JULIEN, 91210 DRAVEIL (FR)
(74) Mandataire: BCIP

(57) **Abrégé**

L'invention propose une armature (26) de système de pare-chocs avant de véhicule automobile. L'armature comprend une partie avant s'étendant verticalement et maintenant le pare-chocs ; une partie arrière (32) comprenant un bord arrière (34), une paroi arrière (36) s'étendant longitudinalement depuis le bord arrière vers la partie avant. La paroi arrière comprend une zone support (38) pour un plot d'appui (18) de capot avant dudit véhicule automobile, la zone support comprenant des moyens fusibles (40) configurés pour rompre en cas d'impact d'une tête de piéton sur le capot avant au-dessus du plot d'appui lors d'un choc piéton. L'armature (26) comprend des moyens de rigidification (50) de la paroi arrière (36) qui s'étendent longitudinalement et depuis la zone support ; afin de réduire la déformation de la paroi arrière lors de l'impact de tête de piéton. Les moyens de rigidification forment des lames de rigidification (52), ou des bretelles.

## Description

L'invention traite du choc piéton contre un véhicule automobile, notamment lorsqu'il occasionne un choc tête sur le capot avant. L'invention se rapporte au domaine des armatures de rigidification de peau de de pare-chocs avant pour véhicule automobile. L'invention propose une armature de pare-chocs avant de véhicule automobile. L'invention a également pour objet un véhicule automobile.

Un véhicule automobile présente communément un ensemble de pare-chocs avant. Ce dernier forme partiellement la carrosserie du véhicule automobile, et présente différents écrans extérieurs dont la précision d'assemblage contribue à la qualité perçue comme à l'aérodynamisme. Ces écrans extérieurs matérialisent la peau de pare-chocs, et jouxtent des dispositifs lumineux, des ailes latérales et un capot avant.

Les écrans extérieurs doivent respecter différents critères de réparabilité en fonction de la vitesse des chocs que le véhicule est susceptible d'amortir. Par exemple pour un choc à faible vitesse, l'ensemble de pare-chocs avant est conçu pour absorber l'énergie du choc par déformation élastique. Par faible vitesse, on entend un choc à vitesse inférieure ou égale à 10 km/h. Une armature de pare-chocs permet de maintenir les différents écrans extérieurs tout en respectant des jeux mécaniques entre eux.

Le véhicule automobile présente couramment un capot avant avec un plot d'appui reposant sur l'armature. Cette configuration compense la souplesse et l'allongement du capot avant. En circulation, un véhicule automobile est susceptible d'être impliqué dans un évènement de type choc piéton. Dans pareil cas, la tête d'un piéton peut heurter le capot du véhicule automobile à l'aplomb de l'armature, et notamment du plot d'appui qui forme généralement un point d'appui.

Ainsi, la rigidité de cette armature de pare-chocs couplée à celle du plot d'appui forme un point dur. Un tel point dur devient pénalisant en termes de sécurité. En effet, il s'oppose à l'enfoncement de la tête dans le capot ; ce qui augmente les risques de blessures comme de lésions ; tant à la tête qu'au cou. Afin d'atténuer l'effet de point dur, l'armature présente une zone fusible sous l'appui de capot.

Le document WO2023/144467A1 présente une face avant de véhicule comportant un premier élément et un deuxième élément de pare-chocs, conçu pour permettre la fixation du premier élément sur la face avant, la face avant présentant au moins une zone de recouvrement dans laquelle le premier élément recouvre au moins partiellement le deuxième élément. La face avant comporte une zone de butée de capot conçue pour former une butée en position fermée d'une extrémité avant d'un capot et pour se rompre en cas de choc piéton subi par la face avant.

Le document FR3122155A1 présente une armature pour le maintien d'un pare-chocs d'un véhicule automobile comprenant une zone de pliage. L'armature comprend une partie avant destinée à servir de support à un pare-chocs, et une partie supérieure destinée à être en vis-à-vis d'un capot du véhicule automobile. La partie supérieure de l'armature comporte au moins une ligne de pliage s'étendant le long de la partie avant de l'armature.

Le document EP4400370A1 présente une armature d'ensemble de pare-chocs avant de véhicule automobile. L'armature comprend une paroi avant destinée à être fixée à un écran extérieur d'ensemble de pare-chocs, et une paroi arrière. La paroi arrière comprend une portion avant inclinée par rapport à la paroi avant, et une portion arrière destinée à reposer sur un support. La portion arrière comprend une zone de liaison destinée à être liée à un support du véhicule automobile, la zone de liaison comprenant des moyens sécables de sorte à détacher la portion arrière du support en cas de collision avec la tête d'un piéton.

Le document FR3139784A1 décrit une armature de pare-chocs équipe un véhicule ayant un capot avant comportant un nez, et comprend une paroi comportant un logement ouvert s'étendant en biseau vers l'avant entre des sous-parties inférieure et supérieure d'une face supérieure en définissant une première découpe dans cette sous-partie supérieure et logeant une butée pour l'appui d'une paroi interne du capot avant, et un joint solidarisé à cette sous-partie supérieure et sur lequel est propre à s'appuyer le nez.

En fonction de son allongement, l'armature présente une certaine souplesse. En cas de choc piéton, cette souplesse implique une déformation de l'armature au niveau de la zone support de la butée du capot avant. Cette déformation se produit au lieu de provoquer une rupture libératrice des zones fusibles. Dès lors, les zones fusibles n'assurent plus leur fonction consistant à autoriser un enfoncement du capot sous l'effet du choc tête. Dès lors la sécurité est pénalisée dans la mesure où la probabilité de blessures augmente dans le scénario de choc piéton.

L'invention a pour objectif de répondre à au moins un des problèmes ou inconvénients rencontrés dans l'art antérieur. En particulier, l'invention a pour objectif d'améliorer la sécurité d'une armature de véhicule automobile. L'invention a également pour objectif d'optimiser la sécurité et la modularité d'une armature de pare-chocs d'un véhicule automobile.

Selon un premier aspect, l'invention propose une armature de système de pare-chocs avant de véhicule automobile; l'armature comprenant une partie avant s'étendant verticalement et destinée à maintenir un écran extérieur de système de pare-chocs avant ; une partie arrière comprenant un bord arrière, une paroi arrière s'étendant longitudinalement depuis le bord arrière vers la partie avant ; **remarquable en ce que** la paroi arrière comprend une zone support destinée à coopérer avec un plot d'appui de capot avant dudit véhicule automobile, la zone support comprenant des moyens fusibles configurés pour rompre en cas d'impact d'une tête de piéton sur le capot avant au-dessus du plot d'appui lors d'un choc piéton ; l'armature comprend des moyens de rigidification de la paroi arrière qui s'étendent longitudinalement et depuis la zone support ; afin de réduire la déformation de la paroi arrière lors de l'impact de tête de piéton.

L'invention ajoute de moyens de rigidification au niveau de la zone support, ce qui a pour effet de bloquer la paroi arrière au niveau des moyens fusibles pour en assurer la rupture en cas de choc piéton dont la tête heurte le capot à l'aplomb de la zone support.

Le document FR3133586A1 expose une doublure de capot de véhicule automobile, destinée à être fixée sur une face interne d'une peau de capot pour former un capot, la doublure présentant au moins un élément de renforcement s'étendant suivant une direction longitudinale du capot, lorsque la doublure est assemblée sur la peau de capot, conçu pour rigidifier le capot, la doublure de capot comprenant au moins une zone d'affaiblissement conçue pour amorcer le pliage de la doublure, lorsqu'un véhicule équipé du capot subit un choc piéton tête. Toutefois, ce document n'apporte aucune solution s'appliquant à une doublure de peau de pare-chocs avant.

Préférentiellement, la paroi arrière comprend un plateau horizontal avec une face supérieure et une face inférieure ; la zone support étant en face supérieure et les moyens de rigidification faisant saillie en face inférieure.

Préférentiellement, les moyens de rigidification comprennent au moins une lame de rigidification s'étendant longitudinalement depuis la zone support ; préférentiellement, la au moins une lame de rigidification s'étend longitudinalement jusqu'aux moyens fusibles.

Préférentiellement, la zone support comprend un plot support avec un sommet et une cloison tubulaire entourant les moyens fusibles ; les moyens de rigidification s'étendant longitudinalement jusqu'à la cloison tubulaire.

Préférentiellement, les moyens de rigidification comprennent une extrémité arrière ; la paroi arrière comprend en outre une nervure d'appui s'étendant transversalement au niveau ladite extrémité arrière ; et/ou les moyens fusibles comprennent une moitié avant et une moitié arrière ; les moyens de rigidification s'étendant depuis la moitié arrière.

Préférentiellement, la paroi arrière comprend un bord latéral avec une aile de rigidification, les moyens de rigidification étant transversalement à distance de l'aile de rigidification.

Préférentiellement, les moyens de rigidification sont longitudinalement à distance du bord arrière.

Préférentiellement, les moyens fusibles comprennent une première longueur, les moyens de rigidification comprennent une deuxième longueur supérieure à la première longueur.

Préférentiellement, la deuxième longueur est au moins deux fois supérieure à la première longueur.

Préférentiellement, les moyens de rigidification comprennent deux profilés de rigidification ; les deux profilés de rigidification étant inclinés l'un par rapport à l'autre d'un angle d'inclinaison compris entre 3° et 30°.

Préférentiellement, l'angle d'inclinaison est compris entre 5° et 20°.

Préférentiellement, l'armature comprend un tronçon avant, un tronçon arrière ; les moyens fusibles étant dans le tronçon arrière.

Préférentiellement, les moyens fusibles sont longitudinalement à distance de la partie avant.

Préférentiellement, l'armature comprend un bord de jonction de la partie avant à la partie arrière.

Préférentiellement, la partie avant comprend un bord supérieur, la partie arrière s'étendant depuis le bord supérieur.

Préférentiellement, la partie arrière comprend une poche ouverte vers le bas ; les moyens fusibles étant formés dans ladite poche ; les moyens de rigidification s'étendent jusqu'à ladite poche.

Préférentiellement, les moyens de rigidification comprennent une deuxième longueur d'au moins 5 cm ; plus préférentiellement d'au moins 10 cm.

Préférentiellement, les moyens de rigidification s'étendent en arrière des moyens fusibles.

Préférentiellement, la paroi arrière est une paroi supérieure.

Préférentiellement, les moyens fusibles comprennent des découpes traversantes ; les moyens de rigidification s'étendant longitudinalement au niveau des découpes traversantes.

Préférentiellement, les au moins deux profilés de rigidification s'écartent l'un de l'autre longitudinalement vers les moyens fusibles.

Préférentiellement, les moyens fusibles sont au sommet du plot.

Selon un autre aspect, l'invention propose une armature de pare-chocs avant de véhicule automobile ; l'armature comprenant une partie avant s'étendant verticalement et destinée à maintenir un écran extérieur ; une paroi supérieure s'étendant vers l'arrière de la partie avant ; **remarquable en ce que** la paroi supérieure comprend une zone support destinée à coopérer avec un plot d'appui de capot avant dudit véhicule automobile, la zone support comprenant des moyens fusibles de rupture configurés pour rompre en cas d'impact d'une tête sur le capot avant au droit du plot d'appui lors d'un choc piéton ; et la paroi supérieure comprend au moins un profilé de rigidification s'étendant longitudinalement depuis la zone support afin de raidir l'armature au niveau des moyens fusibles.

Selon un autre aspect, l'invention propose un véhicule automobile, comprenant un système de pare-chocs avant avec une peau de pare-chocs, une armature derrière la peau de pare-chocs et comprenant une zone support avec des moyens fusibles, un capot avant avec un plot d'appui au-dessus des moyens fusibles, **remarquable en ce que** l'armature est conforme à l'invention.

Préférentiellement, les moyens de rigidification s'étendent longitudinalement jusqu'au plot d'appui.

Préférentiellement, le véhicule automobile comprend un ensemble d'échange thermique, la paroi arrière de l'armature étant verticalement contre l'ensemble d'échange thermique ; les moyens fusibles étant en avant de l'ensemble d'échange thermique ; les moyens de rigidification s'étendant longitudinalement au niveau de l'ensemble d'échange thermique.

Chaque caractéristique introduite par l'expression « préférentiellement » donnée en relation avec l'un des aspects de l'invention s'applique à tous les autres aspects de l'invention.

L'invention sera bien comprise et d'autres aspects et avantages apparaîtront clairement à la lecture de la description qui suit, donnée en référence aux figures annexées et énumérées ci-dessous.
La figure 1 est une vue de profil d'un véhicule automobile selon l'invention.
La figure 2 est une coupe longitudinale d'une armature, d'un capot avant, d'un ensemble d'échange thermique, de peau de pare-chocs de véhicule automobile selon l'invention.
La figure 3 représente une paroi arrière d'armature de pare-chocs avant de véhicule automobile selon l'invention.
La figure 4 est une coupe longitudinale d'une paroi arrière d'armature de pare-chocs avant de véhicule automobile selon l'invention.
La figure 5 est une coupe transversale d'une paroi arrière d'armature de pare-chocs avant de véhicule automobile selon l'invention.

Dans la description qui suit, le terme « comprendre » est synonyme de « inclure » et n'est pas limitatif en ce qu'il autorise la présence d'autres éléments dans le véhicule automobile ou l'armature auquel il se rapporte. Il est entendu que le terme « comprendre » inclut les termes « consister en ». Les termes « externe » et « interne » désigneront respectivement ce qui est orienté vers l'extérieur du véhicule et vers l'intérieur du véhicule.

Dans la présente description, le terme « longitudinal », le terme « longitudinalement », le terme « transversal », et le terme « transversalement » sont employés selon le référentiel du véhicule, dans la configuration de montage. Le terme « longitudinal » correspond à la direction principale de déplacement du véhicule. Le terme « transversal » correspond à une direction perpendiculaire à la direction principale de déplacement du véhicule. Le terme « avant » est en référence au sens principal de déplacement du véhicule. Le terme « arrière » désigne l'opposé de l'avant du véhicule.

L'axe X représente la direction longitudinale, l'axe Y représente la direction transversale, et l'axe Z représente la direction verticale du véhicule automobile. Ces trois axes définissent un trièdre direct dont l'orientation est conservée au travers des figures.

Dans la présente description, les plages de valeurs comprennent les bornes qui les délimitent.

Dans la présente description, les égalités entre les valeurs ne sont pas à entendre au sens strict dans la mesure où chaque égalité autorise une variation d'au plus 10%, préférentiellement au plus 5%, plus préférentiellement au plus 2%, entre ces valeurs.

Dans la présente description, le terme « vertical » et le terme « horizontal » ne sont pas à entendre au sens strict du terme. En effet, ils autorisent une inclinaison d'au plus 20°, préférentiellement d'au plus 10°, plus préférentiellement d'au plus 5°, encore plus préférentiellement d'au plus 2° ; par rapport au sens strict de ces termes.

Dans la présente description, les caractéristiques techniques sont définies dans la configuration de montage de l'armature, à moins que le contraire ne soit mentionné explicitement.

Au travers de la description, les différentes figures utilisent les mêmes signes de référence pour désigner des entités identiques ou similaires.

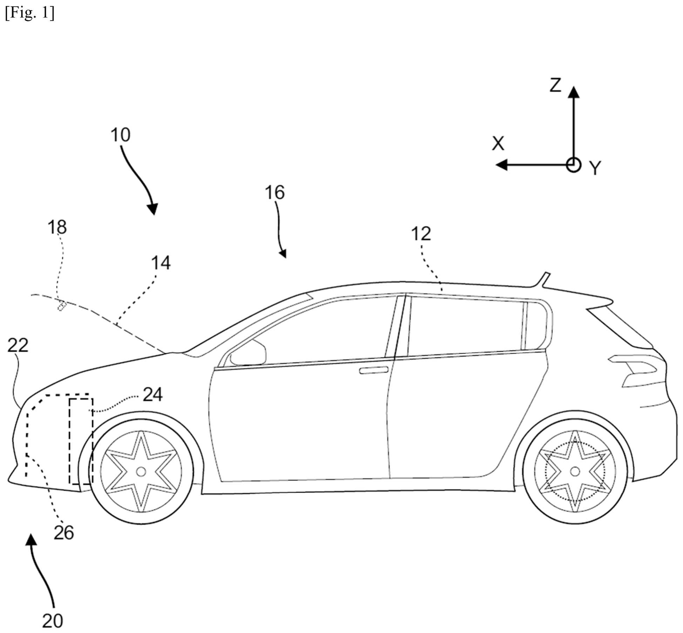

La figure 1 représente un véhicule automobile 10, selon un mode de réalisation de l'invention. Le véhicule automobile 10 comprend des moyens de stockage d'énergie et au moins un moteur (non représentés) adaptés pour entraîner ledit véhicule automobile 10.

Le véhicule automobile 10 comprend une structure 12. La structure 12 forme une caisse extérieure, ou encore une ossature principale du véhicule automobile. La structure 12 délimite différents compartiments du véhicule automobile 10, dont l'habitacle passager, le coffre de chargement, le compartiment moteur (non représentés). La structure 12 peut être formée d'un assemblage de tôles embouties et soudées les unes aux autres. La structure 12 forme un support de montage pour le groupe motopropulseur, les systèmes de suspension, le système de direction, les systèmes de freinage.

La structure 12 relie différentes parties du véhicule automobile 10 dont les ouvrants, qui incluent le capot avant 14 ; couramment appelé capot moteur. Il est représenté en traits pointillés en position ouverte ; et en trait plein en position fermée dans laquelle il clôt le compartiment avant. Le capot avant 14 forme la carrosserie 16 du véhicule automobile 10. Sa position participe à la qualité perçue de la carrosserie 16. Afin de le positionner précisément en orientation fermée, le capot avant 14 comprend un plot d'appui 18, également appelé butée d'appui.

Le véhicule automobile 10 comprend un système de pare-chocs avant 20. Le système de pare-chocs avant 20 est apte à absorber des chocs à basse vitesse, par exemple lors d'une manœuvre de stationnement. Le système de pare-chocs avant 20 comprend une peau de pare-chocs 22. La peau de pare-chocs 22 forme partiellement la carrosserie 16. Elle s'étend jusqu'aux ailes latérales, elle délimite les dispositifs d'éclairage. Elle comprend plusieurs panneaux extérieurs.

Lors d'un choc à basse vitesse, la peau de pare-chocs 22 se déforme de manière élastique lors du contact avec l'obstacle, puis revient en position, sans que ne subsiste de déformation permanente après éloignement de l'obstacle impliqué dans le choc.

Le véhicule automobile 10 comprend en outre un ensemble d'échange thermique 24. L'ensemble d'échange thermique 24 comprend des équipements de refroidissement du moteur du véhicule, des équipements de climatisation de l'habitacle. L'ensemble d'échange thermique 24 présente un échangeur de chaleur et un ventilateur. Il comporte encore un cadre de montage entourant les équipements. L'ensemble d'échange thermique 24 est également désigné en tant que bloc de façade avant.

Afin d'optimiser le positionnement et la fermeté au toucher, le véhicule automobile 10 comprend une armature 26. L'armature 26 renforce la peau de pare-chocs 22. L'armature 26 repose sur l'ensemble d'échange thermique 24. En position fermée du capot avant 14, le plot d'appui 18 repose sur l'armature 26. Selon un mode de réalisation préféré, en position fermée, le plot d'appui 18 est longitudinalement à distance de l'ensemble d'échange thermique 24.

Le véhicule automobile peut par exemple être un véhicule automobile particulier ou un véhicule automobile utilitaire.

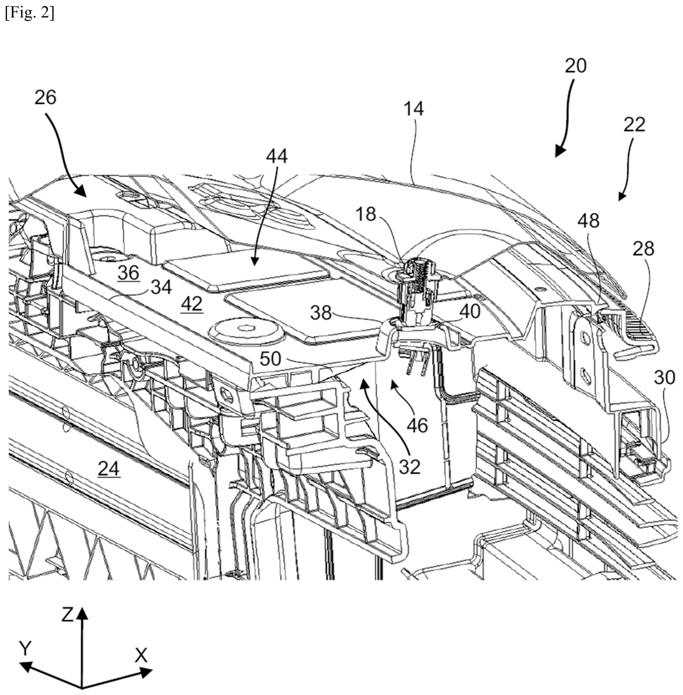

La figure 2 présente une coupe d'un ensemble avant de véhicule automobile, selon un mode de réalisation de l'invention. Le véhicule automobile peut correspondre à celui présenté en relation avec la figure 1. L'ensemble avant est vu depuis l'arrière.

L'ensemble avant regroupe l'armature 26, la peau de pare-chocs 22, l'ensemble d'échange thermique 24 (partiellement représenté). La peau de pare-chocs 22 comprend un écran extérieur 28, tel un élément de carrosserie. L'écran extérieur 28 est une grille d'entrée d'air ou un une cloison étanche. Le capot avant 14 présente une peau extérieure et une doublure de renfort. Le plot d'appui 18 est fixé à la doublure de renfort.

L'armature 26 de système de pare-chocs avant 20 comprend une partie avant 30 s'étendant verticalement et apte à maintenir l'écran extérieur 28. La partie avant 30 comprend des moyens de fixation pour l'écran extérieur 28. Elle comprend une rangée d'orifices de fixation (non représentés). L'armature 26 est monobloc. L'armature 26 est venue de matière.

L'armature 26 comprend également une partie arrière 32. La partie arrière 32 est longitudinalement opposée à la partie avant 30. La partie avant 30 comprend un bord supérieur 48, la partie arrière 32 s'étendant jusqu'au bord supérieur 48. Le bord supérieur 48 est un bord de jonction de la partie avant 30 à la partie arrière 32. La partie arrière 32 comprend un bord arrière 34, une paroi arrière 36 s'étendant longitudinalement depuis le bord arrière 34 vers la partie avant 30. Le bord arrière 34 s'étend transversalement. Il est horizontal. La paroi arrière 36 forme l'extrémité arrière de l'armature 26. La paroi arrière 36 est généralement horizontale. Elle s'étend principalement transversalement.

La paroi arrière 36 comprend une zone support 38 recevant le plot d'appui 18 (représenté en position fermé du capot avant) afin de maintenir le capot avant 14 dudit véhicule automobile. La zone support 38 forme une protubérance supérieure. La zone support 38 comprend des moyens fusibles 40 configurés pour rompre en cas d'impact d'une tête de piéton sur le capot avant 14 ; au droit du plot d'appui 18 ; lors d'un choc piéton. Le positionnement des moyens fusibles 40 est notamment adapté lorsque le piéton est un enfant.

L'armature 26 comprend des moyens de rigidification 50 de la paroi arrière 36 qui s'étendent depuis la zone support 38 ; afin de réduire la déformation de la paroi arrière 36 lors de l'impact de tête de piéton. Ceci permet de rigidifier la paroi arrière 36 et de maintenir en position la zone support 38. Ceci réduit le déplacement parasite, et favorise la rupture des moyens fusibles 40.

La paroi arrière 36 est une paroi supérieure. Elle est généralement étanche. La paroi arrière 36 comprend un plateau horizontal 42 avec une face supérieure 44 et une face inférieure 46. La zone support 38 est agencée en face supérieure 44. Les moyens de rigidification font saillie en face inférieure 46. Les moyens de rigidification sont verticalement à l'opposé de la zone support 38.

Longitudinalement, l'armature 26 comprend un tronçon avant telle la partie avant, un tronçon arrière telle la paroi arrière ; les moyens fusibles 40 étant dans le tronçon arrière. Les moyens fusibles 40 sont longitudinalement à distance de la partie avant 30. Longitudinalement, l'armature 26 présente un tronçon central à distance des moyens fusibles 40.

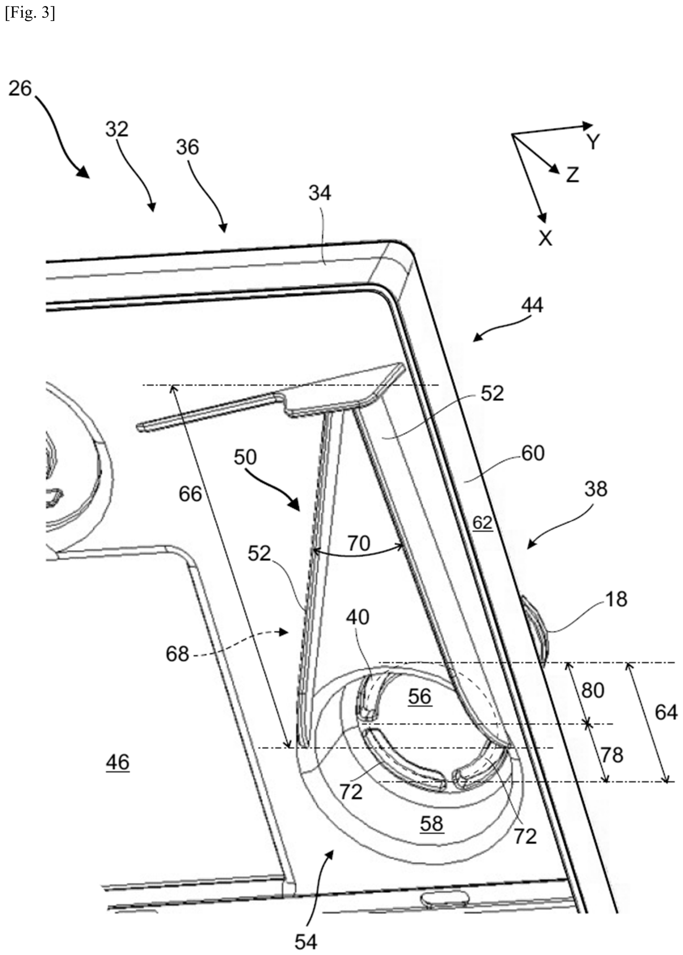

La figure 3 présente une paroi arrière 36 d'armature 26 de véhicule automobile, selon un mode de réalisation de l'invention. Le véhicule automobile peut correspondre à celui présenté en relation avec l'une des figures 1 à 2. La paroi arrière 36 est vue du dessous afin d'exposer la face inférieure 46, et le bord arrière 34.

La paroi arrière 36 comprend une zone support 38 destinée à coopérer avec un plot d'appui 18 d'un capot avant (non représenté). La zone support 38 comprend des moyens fusibles 40 configurés pour rompre en cas d'impact d'une tête de piéton sur le capot avant au-dessus du plot d'appui lors d'un choc piéton. L'armature 26 comprend des moyens de rigidification 50 de la paroi arrière 36 qui s'étendent longitudinalement. Les moyens de rigidification 50 s'étendent également depuis la zone support 38. Cette configuration permet de réduire la déformation de la paroi arrière 36 lors de l'impact de tête de piéton. Ainsi, sa déformation parasite est évitée ; ce qui favorise la rupture des moyens fusibles 40.

Les moyens de rigidification 50 comprennent au moins une lame de rigidification 52. Chaque lame de rigidification 52 s'étend longitudinalement depuis la zone support 38. Au moins une ou chaque lame de rigidification 52 s'étend longitudinalement jusqu'aux moyens fusibles 40.

Selon un mode de réalisation, chaque lame comprend un profil constant sur sa longueur. Selon une alternative de l'invention, chaque lame présente un profil variable ; par exemple avec une hauteur diminuant vers l'arrière.

La zone support 38 est une zone de rupture, et/ou un appui fusible. La zone support 38 comprend un plot support 54 avec un sommet 56 et une cloison tubulaire 58 entourant les moyens fusibles 40. Les moyens fusibles 40 sont sur le sommet 56. Le plot support 54 est essentiellement évidé. Il délimite une poche ouverte vers le bas. Le sommet 56 est le point le plus haut du plot support 54, et optionnellement de la paroi arrière 36. Les moyens de rigidification 50 s'étendant longitudinalement jusqu'à la cloison tubulaire 58.

Selon une alternative de l'invention, les moyens fusibles sont formés sur la cloison tubulaire. Par exemple la cloison tubulaire est en accordéon.

La paroi arrière 36 comprend un bord latéral 60 avec une aile de rigidification 62. L'aile de rigidification 62 forme un bord avec un profil en lettre « T ». Elle forme une double cornière. Elle fait saillie en face inférieure 46 et en face supérieure 44. Les moyens de rigidification 50 sont transversalement à distance de l'aile de rigidification 62. Les moyens de rigidification 50 sont longitudinalement à distance du bord arrière 34. La présente configuration optimise la rigidité localisée au niveau des moyens fusibles 40, ainsi que la masse, la compacité.

Les moyens fusibles 40 comprennent une première longueur 64, les moyens de rigidification 50 comprennent une deuxième longueur 66 supérieure à la première longueur 64 ; préférentiellement au moins deux fois supérieure ; plus préférentiellement au moins trois fois supérieure. La première longueur 64 est mesurée sur la face inférieure 46. La deuxième longueur 66 est mesurée sur le sommet 56. La première longueur 64 et la deuxième longueur 66 sont mesurées longitudinalement. Elles sont des valeurs moyennes.

Les moyens de rigidification 50 comprennent au moins un profilé de rigidification 68 ; préférentiellement deux profilés de rigidification 68. Les deux profilés de rigidification 68 sont inclinés l'un par rapport à l'autre d'un angle d'inclinaison 70 compris entre 3° et 30°. Préférentiellement, l'angle d'inclinaison 70 est compris entre 5° et 20°. Optionnellement, l'angle d'inclinaison 70 est compris entre 10° et 15°. L'angle d'inclinaison 70 est un angle moyen. Selon un mode de réalisation, chaque profilé de rigidification 68 est une lame de rigidification 52. Ainsi, les profilés de rigidification 68 décrivent un triangle, ce qui améliore encore la rigidité de la paroi arrière 36.

Selon un mode de réalisation, les moyens fusibles 40 comprennent une moitié avant 78 et une moitié arrière 80. Les moyens de rigidification 50 s'étendant depuis la moitié arrière 80. Ils sont à distance de la moitié avant 78. Cette configuration permet de chercher un appui en arrière, en plus de la fixation apportée par la partie avant, tout en optimisant la masse. La moitié avant 78 et la moitié arrière 80 sont des moitiés longitudinales.

Selon une alternative ou une option de l'invention, chaque profilé de rigidification comprend un tube de rigidification, tel un tube rond ou carré.

Selon une alternative de l'invention, les moyens de rigidification comprennent une ondulation de profil longitudinal, formée directement par la paroi arrière.

Selon une alternative de l'invention, les moyens de rigidification comprennent une cornière longitudinale collée à la paroi arrière.

La partie arrière 32 comprend une poche ouverte vers le bas, telle la poche du plot support 54. Les moyens fusibles 40 sont formés dans ladite poche. Les moyens de rigidification 50 s'étendent jusqu'à ladite poche.

Les moyens fusibles 40 sont aptes à rompre en cas de choc. Les moyens fusibles 40 sont aptes à résister à un effort de 25 à 100 daN ; puis à rompre au-delà. Les moyens fusibles 40 comprennent des découpes traversantes 72. Les moyens de rigidification 50, notamment le au moins un profilé de rigidification 68 ; s'étendant longitudinalement au niveau des découpes traversantes 72. Les découpes traversantes 72 communiquent avec l'intérieur du plot support 54.

Selon une alternative de l'invention, les moyens fusibles comprennent une ligne de moindre épaisseur se coupant en cas de choc.

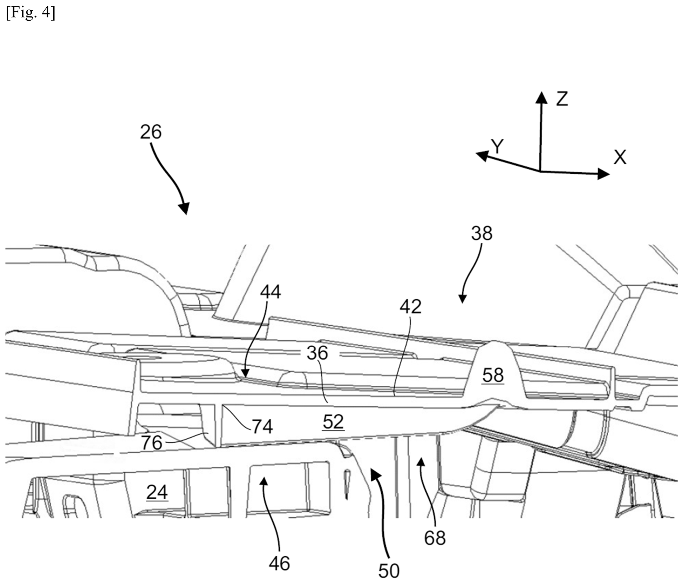

La figure 4 est une coupe d'une armature 26 de véhicule automobile, selon un mode de réalisation de l'invention. La coupe traverse la zone support, également appelée zone d'appui. La coupe est tangente à la cloison tubulaire 58 autour des moyens fusibles (non représentés). Le véhicule automobile peut correspondre à celui présenté en relation avec l'une des figures 1 à 3.

La paroi arrière 36 comprend un plateau horizontal 42 avec une face supérieure 44 et une face inférieure 46. Le plateau horizontal 42 forme une plaque. Il est continu. La zone support 38 est en face supérieure 44 et les moyens de rigidification 50 font saillie en face inférieure 46. Les moyens de rigidification 50, tel chaque profilé de rigidification 68, s'étendent vers l'arrière des moyens fusibles (non représentés). L'agencement des moyens de rigidification 50 favorise l'écoulement de l'eau en face supérieure 44.

Les moyens de rigidification 50 comprennent au moins une lame de rigidification 52 s'étendant longitudinalement depuis la zone support 38 ; préférentiellement, la au moins une lame de rigidification 52 s'étend longitudinalement jusqu'aux moyens fusibles. Elle est horizontale.

Les moyens de rigidification 50 comprennent une extrémité arrière 74. La paroi arrière 36 comprend en outre une nervure d'appui 76 au niveau de ladite extrémité arrière 74. La nervure d'appui 76 s'étend généralement transversalement. La nervure d'appui 76 fait saillie en face inférieure 46. La nervure d'appui 76 est en appui sur l'ensemble d'échange thermique 24. Préférentiellement, les moyens de rigidification 50 sont en appui sur l'ensemble d'échange thermique 24. La paroi arrière 36 comprend des bossages de fixation à l'ensemble d'échange thermique 24.

Les moyens de rigidification 50, notamment chaque lame de rigidification 52, comprennent une deuxième longueur d'au moins 5 cm ; plus préférentiellement d'au moins 10 cm. La deuxième longueur est une longueur maximale. Elle est mesurée longitudinalement, notamment le long de chaque aile de rigidification.

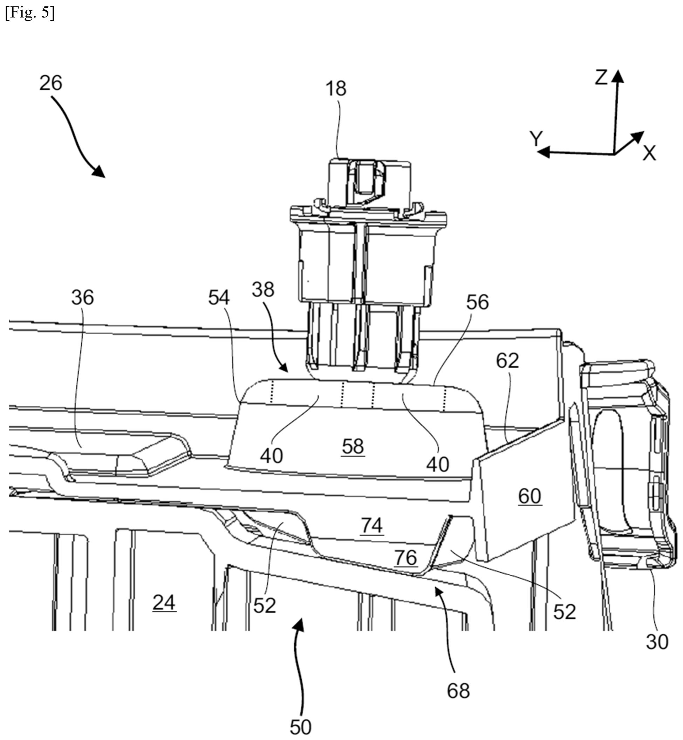

La figure 5 est une coupe d'une armature 26 de véhicule automobile, selon un mode de réalisation de l'invention. La coupe est vue de l'arrière, au niveau de la paroi arrière 36. Le véhicule automobile peut correspondre à celui présenté en relation avec l'une des figures 1 à 4. Le plot d'appui 18 est représentée.

Les moyens de rigidification 50 comprennent une extrémité arrière 74. La paroi arrière 36 comprend en outre une nervure d'appui 76 s'étendant transversalement au niveau de ladite extrémité arrière 74. Les moyens de rigidification 50 s'étendent depuis la nervure d'appui 76. Les moyens de rigidification 50 sont reliés par la nervure d'appui 76. Cette dernière relie les profilés de rigidification 68 et/ou les lames de rigidification 52.

La paroi arrière 36 comprend un bord latéral avec une aile de rigidification 62, les moyens de rigidification 50 étant transversalement à distance de l'aile de rigidification 62. Les moyens de rigidification 50 sont séparés du bord arrière. Les moyens de rigidification 50 s'étendent plus bas que l'aile de rigidification 62. Cette configuration améliore de la rigidité à la flexion face à un effort du dessus.

La zone support 38 comprend un plot support 54. Le plot support 54 est surmonté d'un sommet 56. Il est ceinturé par une cloison tubulaire 58. Les moyens fusibles 40 sont au sommet 56 du plot support 54. La cloison tubulaire 58 peut être sensiblement conique. La cloison tubulaire 58 encercle les moyens fusibles 40 ; les moyens de rigidification 50 s'étendant longitudinalement jusqu'à la cloison tubulaire.

Les moyens de rigidification 50 comprennent deux lames de rigidification 52, tels deux profilés de rigidification 68. Les deux profilés de rigidification 68 sont tournés l'un par rapport à l'autre d'un angle d'inclinaison supérieur à 0°. L'angle d'inclinaison est autour d'un axe vertical. L'angle d'inclinaison est inférieur à un dixième de tour, préférentiellement inférieur à un quinzième de tour.

Les profilés de rigidification 68 et/ou les lames de rigidification 52 s'écartent l'une de l'autre longitudinalement vers les moyens fusibles 40. Ils/elles convergent vers la nervure d'appui 76. La nervure d'appui 76 les relie pour augmenter la rigidité. La nervure d'appui 76 épouse l'ensemble d'échange thermique 24 ; les moyens de rigidification 50 également. La zone support 38 est longitudinalement à distance de l'ensemble d'échange thermique 24.

Ainsi, l'ensemble d'échange thermique 24 supporte les moyens fusibles 40 par l'intermédiaire des moyens de rigidification 50. Ils deviennent plus stables. La rupture des moyens fusibles 40 est mieux contrôlée ; ce qui préserve la sécurité en cas de choc piéton entrainant un impact d'une tête au droit du plot d'appui 18 du capot avant.

Par ailleurs, la présence des moyens de rigidification 50 permet d'éloigner le plot d'appui 18 de l'ensemble d'échange thermique 24. Ceci permet un allongement de la paroi arrière 36 et un montage en porte-à-faux de la zone support 38. Le porte à faux est d'au moins 10 cm. L'invention s'adapte à une augmentation de l'écartement de l'ensemble d'échange thermique 24 par rapport à la partie avant 30, notamment pour un meilleur échange thermique, et une meilleure réparabilité en cas de choc avant.

Selon un mode de réalisation préféré, l'armature 26 est réalisée en un matériau plastique ou composite. Le matériau plastique peut comprendre un matériau thermoplastique ou un matériau thermodurcissable. Selon un mode de réalisation préféré, le matériau plastique est sélectionné dans le groupe comprenant les résines polypropylène, polyamide, polyphtalamide, polyétheréthercétone, polysulfure de phénylène, polyamide-imide, polyétherimide, polyarylamide, polyépoxyde, polyester insaturés, vinylester ou polyester-vinylester. Par exemple, le matériau composite comprend une matrice en un matériau plastique tel que décrit ci-dessus avec un renfort. Par exemple, le renfort comprend des fibres de verre ou de carbone.

L'armature 26 comprend au moins 10 % en poids de matériau plastique recyclé basé sur le poids total du matériau plastique ; de préférence de 10 à 80% en poids ; plus préférentiellement de 20 à 60% en poids ou de 30 à 40% en poids. L'emploi de matériau plastique recyclé diminue l'empreinte écologique du véhicule.

L'invention comprend la combinaison de tous les modes de réalisation illustrés par toutes les figures.

Les figures 2 à 5 sont des vues isométriques. Elles respectent chacune une échelle spécifique, des angles réels et des proportions réelles.

## Revendications

1. Armature (26) de système de pare-chocs avant (20) de véhicule automobile (10) ; l'armature (26) comprenant une partie avant (30) s'étendant verticalement et destinée à maintenir un écran extérieur (28) de système de pare-chocs avant (20) ; une partie arrière (32) comprenant un bord arrière (34), une paroi arrière (36) s'étendant longitudinalement depuis le bord arrière (34) vers la partie avant (30) ; **caractérisée en ce que** la paroi arrière (36) comprend une zone support (38) destinée à coopérer avec un plot d'appui (18) de capot avant (14) dudit véhicule automobile (10), la zone support (38) comprenant des moyens fusibles (40) configurés pour rompre en cas d'impact d'une tête de piéton sur le capot avant (14) au-dessus du plot d'appui (18) lors d'un choc piéton ; l'armature (26) comprend des moyens de rigidification (50) de la paroi arrière (36) qui s'étendent longitudinalement et depuis la zone support (38); afin de réduire la déformation de la paroi arrière (36) lors de l'impact de tête de piéton.

2. Armature (26) selon la revendication 1, **caractérisée en ce que** la paroi arrière (36) comprend un plateau horizontal (42) avec une face supérieure (44) et une face inférieure (46) ; la zone support (38) étant en face supérieure (44) et les moyens de rigidification (50) faisant saillie en face inférieure (46).

3. Armature (26) selon l'une des revendications 1 à 2, **caractérisée en ce que** les moyens de rigidification (50) comprennent au moins une lame de rigidification (52) s'étendant longitudinalement depuis la zone support (38) ; préférentiellement, la au moins une lame de rigidification (52) s'étend longitudinalement jusqu'aux moyens fusibles (40).

4. Armature (26) selon l'une des revendications 1 à 3, **caractérisée en ce que** la zone support (38) comprend un plot support (54) avec un sommet (56) et une cloison tubulaire (58) entourant les moyens fusibles (40) ; les moyens de rigidification (50) s'étendant longitudinalement jusqu'à la cloison tubulaire (58).

5. Armature (26) selon l'une des revendications 1 à 4, **caractérisée en ce que** les moyens de rigidification (50) comprennent une extrémité arrière (74) ; la paroi arrière (36) comprend en outre une nervure d'appui (76) s'étendant transversalement au niveau ladite extrémité arrière (74) ; et/ou les moyens fusibles (40) comprennent une moitié avant (78) et une moitié arrière (80) ; les moyens de rigidification (50) s'étendant depuis la moitié arrière (80).

6. Armature (26) selon l'une des revendications 1 à 5, **caractérisée en ce que** la paroi arrière (36) comprend un bord latéral (60) avec une aile de rigidification (62), les moyens de rigidification (50) étant transversalement à distance de l'aile de rigidification (62) ; préférentiellement, les moyens de rigidification (50) sont longitudinalement à distance du bord arrière (34).

7. Armature (26) selon l'une des revendications 1 à 6, **caractérisée en ce que** les moyens fusibles (40) comprennent une première longueur (64), les moyens de rigidification (50) comprennent une deuxième longueur (66) supérieure à la première longueur (64) ; préférentiellement au moins deux fois supérieure à la première longueur (64).

8. Armature (26) selon l'une des revendications 1 à 7, **caractérisée en ce que** les moyens de rigidification (50) comprennent deux profilés de rigidification (68) ; les deux profilés de rigidification (68) étant inclinés l'un par rapport à l'autre d'un angle d'inclinaison (70) compris entre 3° et 30° ; préférentiellement compris entre 5° et 20°.

9. Véhicule automobile (10) comprenant un système de pare-chocs avant (20) avec une peau de pare-chocs (22), une armature (26) derrière la peau de pare-chocs (22) et comprenant une zone support (38) avec des moyens fusibles (40), un capot avant (14) avec un plot d'appui (18) au-dessus des moyens fusibles (40), **caractérisé en ce que** l'armature (26) est conforme à l'une de revendications 1 à 8 ; préférentiellement, les moyens de rigidification (50) s'étendent longitudinalement jusqu'au plot d'appui (18).

10. Véhicule automobile (10) selon la revendication 9, **caractérisé en ce que** le véhicule automobile (10) comprend un ensemble d'échange thermique (24), la paroi arrière (36) de l'armature (26) étant verticalement contre l'ensemble d'échange thermique (24) ; les moyens fusibles (40) étant en avant de l'ensemble d'échange thermique (24) ; les moyens de rigidification (50) s'étendant longitudinalement au niveau de l'ensemble d'échange thermique (24).
